Europäisches Patentamt

European Patent Office

Office européen des brevets

(19)

(11) Veröffentlichungsnummer : **0 336 920 B1**

(12)
# EUROPÄISCHE PATENTSCHRIFT

(45) Veröffentlichungstag der Patentschrift :
23.10.91 Patentblatt 91/43

(51) Int. Cl.⁵ : **F27B 1/20, C21B 13/02, F27D 3/00, C21C 5/56**

(21) Anmeldenummer : **89890077.4**

(22) Anmeldetag : **16.03.89**

(54) **Verfahren zum Chargieren von Roheisen, sowie Vorrichtung zur Durchführung dieses Verfahrens.**

(30) Priorität : **08.04.88 AT 924/88**

(43) Veröffentlichungstag der Anmeldung :
**11.10.89 Patentblatt 89/41**

(45) Bekanntmachung des Hinweises auf die
Patenterteilung :
**23.10.91 Patentblatt 91/43**

(84) Benannte Vertragsstaaten :
**CH DE FR GB IT LI SE**

(56) Entgegenhaltungen :
**EP-A- 0 114 040**
**DE-A- 2 119 692**

(73) Patentinhaber : **VOEST-ALPINE STAHL
DONAWITZ GESELLSCHAFT M.B.H.
Pestalozzistrasse 128 Postfach 1
A-8700 Leoben-Donawitz (AT)**

(72) Erfinder : **Mitter, Gerhard Dipl. Ing. Dr.
Nelkengasse 15
A-4050 Traun (AT)**
Erfinder : **Lugscheider, Walter Dipl. Ing. Dr.
Ziegelstrasse 9L
A-8045 Graz (AT)**

(74) Vertreter : **Haffner, Thomas M., Dr. et al
Patentanwaltskanzlei Dipl.-Ing. Adolf
Kretschmer Dr. Thomas M. Haffner
Schottengasse 3a
A-1014 Wien (AT)**

## Beschreibung

Die Erfindung bezieht sich auf ein Verfahren zum Chargieren von Roheisen, Schrott oder Erz in einen Schmelzofen oder Schmelzreduktionsofen, bei welchem die Charge vor dem Einbringen in den Ofen vorgewärmt wird, sowie auf eine Vorrichtung zur Durchführung dieses Verfahrens.

Im Zuge metallurgischer Prozesse, insbesondere im Zuge von Reduktions- und Schmelzprozessen, sind im Hinblick auf möglichst günstige Energieausnutzung in der Regel Vorwärmstufen und Vorreduktionsstufen vorgesehen. Insbesondere bei Schachtofenprozessen und Schmelzofenprozessen wurden eine Reihe von energiesparenden Maßnahmen, wie beispielsweise Vorwärmstufen und Vorreduktionsstufen, untersucht, wobei Vorreduktionsstufen bei Elektro-Niederschachtöfen und Schrottvorwärmstufen bei Elektrolichtbogenöfen bereits Stand der Technik sind. Naturgemäß erweisen sich Anordnungen, bei welchen das vorzuwärmende Gut möglichst direkt mit dem energiereichen exergetischem Prozeßbereich in Verbindung steht, wie z.B. Schachtvorwärmungen beim Schrottschmelzen im Elektrolichtbogenofen, als besonders vorteilhaft.

Eine Reihe von Schmelz- und Schmelzreduktionsprozessen kann gegenwärtig nur diskontinuierlich chargiert werden und ein derartiges diskontinuierliches Chargieren erfordert aufwendige Eintragsysteme mit mechanisch bewegten Teilen, wie z.B. Schneckenschleusen, Glocken oder Schurren. Alle diese mechanischen Teile sind hohen Temperaturen ausgesetzt und daher einem hohen Verschleiß unterworfen.

Die Erfindung zielt nun darauf ab, ein Verfahren der eingangs genannten Art zu schaffen, bei welchem das Einbringen ohne Zuhilfenahme beweglicher, mechanischer Teile möglich ist und mit welchem sowohl eine diskontinuierliche als auch kontinuierliche Zufuhr der Charge möglich ist, wobei gleichzeitig die Energie des nachfolgenden Schmelz- bzw. Schmelzreduktionsprozesses möglichst weitgehend für Vorwärmzwecke ausgenutzt werden kann. Zur Lösung dieser Aufgabe besteht das erfindungsgemäße Verfahren im wesentlichen darin, daß die Charge vor dem Einbringen unter Verwendung eines elektromagnetischen Feldes bis zum Erreichen einer vorbestimmten Temperatur gehalten wird. Dadurch, daß anstelle mechanisch bewegter Einrichtungen ein elektromagnetisches Feld zum Zurückhalten der Charge vor dem Einbringen verwendet wird, kann eine offene Verbindung des Schmelz- bzw. Schmelzreduktionsofens zur Chargenzuführung aufrechterhalten werden, wodurch die Strahlungswärme und die Prozeßwärme unmittelbar auf die Charge zu Vorwärmzwecken abgegeben werden kann. Die Zuführung der Charge in den Schmelzofen bzw. in den Schmelzreduktionsofen kann durch die Verwendung des elektromagnetischen Feldes weitgehend automatisiert werden, wobei das in der Physik bekannte Phänomen des Verlustes der magnetischen Eigenschaften bei bestimmten Temperaturen zu diesem Zweck ausgenützt werden kann. Mit Vorteil wird hiebei die Automatisierung der Zuführung dadurch erreicht, daß die Charge durch Annäherung ihrer Temperatur an den Curiepunkt freigegeben wird. Beim sogenannten Curiepunkt bzw. der Curietemperatur des jeweiligen Einsatzstoffes verliert die Charge ihre ferromagnetischen Eigenschaften und die Haltekraft, wie sie von einem elektromagnetischen Feld ausgeübt werden kann, kann ab dem Curiepunkt nicht mehr ausgeübt werden. Ein auf die entsprechende Temperatur vorgewärmtes Material wird somit spätestens bei Erreichen des Curiepunktes nicht mehr vom elektromagnetischen Feld gehalten und in den Schmelzofen bzw. Schmelzreduktionsofen chargiert.

Im gesamten Bereich der Stahl-Eisen-Metallurgie liegen mehr oder minder magnetische Einsatzstoffe vor. Bei Mischungen von Einsatzstoffen mit verschiedenen Curietemperaturen, kann der ferromagnetische Anteil, wie er von Eisenchargen gebildet wird, auch zur Stützung für Materialien mit niedrigerer Curietemperatur verwendet werden. Der magnetische Fluß des elektromagnetischen Feldes durchsetzt das magnetische Schüttgut, welches von Schrott, Roheisen, oxidischen oder metallischen Pellets od.dgl. gebildet wird, wobei für die Aufbringung des elektromagnetischen Feldes besonders einfache und mechanisch wenig verschleißanfällige Einrichtungen verwendet werden können.

Eine bevorzugte Vorrichtung zur Durchführung des erfindungsgemäßen Verfahrens besteht hiebei darin, daß zwischen der Aufgabeöffnung des Ofens und einem Vorratsbunker bzw. einem Vorreduktionsofen eine elektromagnetische Halteeinrichtung angeordnet ist. Die elektromagnetischen Halteeinrichtungen können in einfacher Weise als den Zuführungskanal umgebende Spule oder als Ringmagnet ausgebildet sein. Im Falle von Feldspulen durchsetzt der magnetische Fluß das Einsatzmaterial im Bereich der Feldspule, und es ist in diesem Fall besonders vorteilhaft die Ausbildung so zu treffen, daß der Zuführungskanal zumindest im Bereich der elektromagnetischen Halteeinrichtung aus nichtferromagnetischem Material, wie z.B. austenitischem Stahl mit feuerfester Zustellung, ausgebildet ist. Das Magnetfeld hält das Einsatzgut bei geeignet hoher Feldstärke bis maximal zur Sättigungsmagnetisierung so lange, bis die Temperatur des Einsatzgutes im Bereich des stärksten Feldes den Curiepunkt überschreitet. Die Curietemperatur für Stahlschrott liegt bei etwa 770°C und es kann daher Schrott bis zu dieser Temperatur vorgewärmt werden, bevor er durch Verlust der magnetischen Haltekräfte in den Schmelzofen bzw. in den Schmelzreduktionsofen eingebracht wird. Bei dieser Temperatur für Stahlschrott ist die maximal mögliche Flußdichte mit 2,1 Tesla anzunehmen. Bei Eintrag von schwächer magnetischen Substanzen, wie z.B. Roheisen und/oder Eisenoxiden oder Erzen, kann eine bestimmte Menge ebenfalls bis zur Curietemperatur 770°C des Eisenschrottes erfaßt werden, wenn durch die Mischungsanteile an schwächer oder unmagnetischen Zuschlägen (Kalk, Kohle, Koks) noch eine entsprechend starke Magnetflußdurchsetzung der Schrottanteile ermöglicht wird und diese ein tragendes Stützgerüst für diese anderen schwächer oder nicht-ferromagnetischen Anteile bilden können. Insgesamt ergibt sich ein ferromagnetischer Verbund, mit welchem auch schwächer magnetische oder unmagnetische Anteile gehalten werden können.

Eine Verbesserung der Stützung kann auch durch mechanische Stützringe in der Feldzone oder eine konische Schachtausführung erreicht werden, die eine Abstützung der magnetisierten Schrottanteile der magnetisierten Verbundschüttung ermöglichen.

Auf jeden Fall kann eine Verringerung der für das Festhalten der Schüttung — des gesamten Schüttgewichtes — notwendigen magnetischen Haltekraft damit erreicht werden. Bei Chargen für Schmelzreduktionsverfahren können auch Eisenerze, Eisenerzmöller, Eisenschwamm nach diesem Prinzip bis zum Erreichen der Curietemperatur der am stärksten magnetisierbaren Einzelkomponenten festgehalten werden.

Insgesamt ermöglicht die Verwendung elektromagnetischer Haltekräfte für das Einsatzgut bzw. die Charge für einen metallurgischen Prozeß eine offene Verbindung mit dem Prozeßbereich, in welchem das Einsatzgut, d.h. primäre Rohstoffe, Erze, Möller, Schrotte od.dgl., reagieren bzw. umgewandelt werden sollen. Die Reaktion bzw. Umwandlung besteht bei derartigen metallurgischen Prozessen in erster Linie in einer Reduktion und/oder einem Schmelzvorgang. Die Art des Einbringens der Charge unter Verwendung eines elektromagnetischen Feldes als Haltekraft bietet die Möglichkeit einer kontinuierlichen, leichten Steuerung bzw. Regelung des Eintrages des Einsatzmaterials in den metallurgischen Prozeß, wobei auf Grund der offenen Verbindung die Prozeßenergie für die Vorwärmung und/oder Vorreduktion bis zur Curietemperatur des am stärksten magnetisierbaren Einsatzgutes oder Anteiles einer Mischung ermöglicht wird.

Auch bei Schrottschmelzverfahren ermöglicht die Verwendung des elektromagnetischen Feldes als Einrichtung zum kontinuierlichen Chargieren bzw. Aufgeben von Schrott im wesentlichen eine verbesserte Ausnutzung der Abwärme aus dem Schmelzprozeß. Auch hier läßt sich der Schrotteintrag durch Anpassung an Schrottqualitäten bzw. durch geeignete Zuschlagstoffe, wie Pellets und Roheisen, in einfacher Weise steuern bzw. regeln.

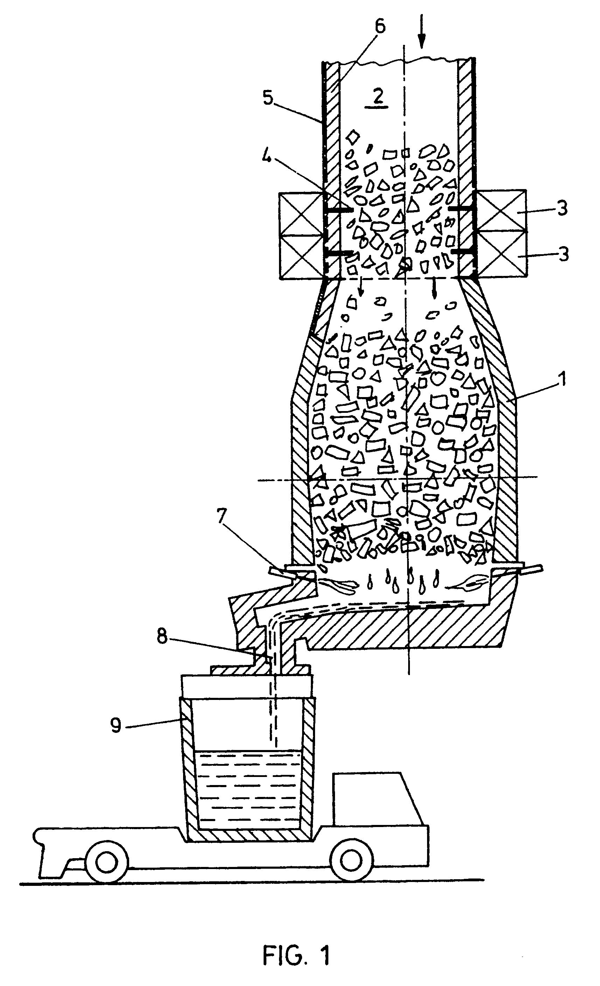

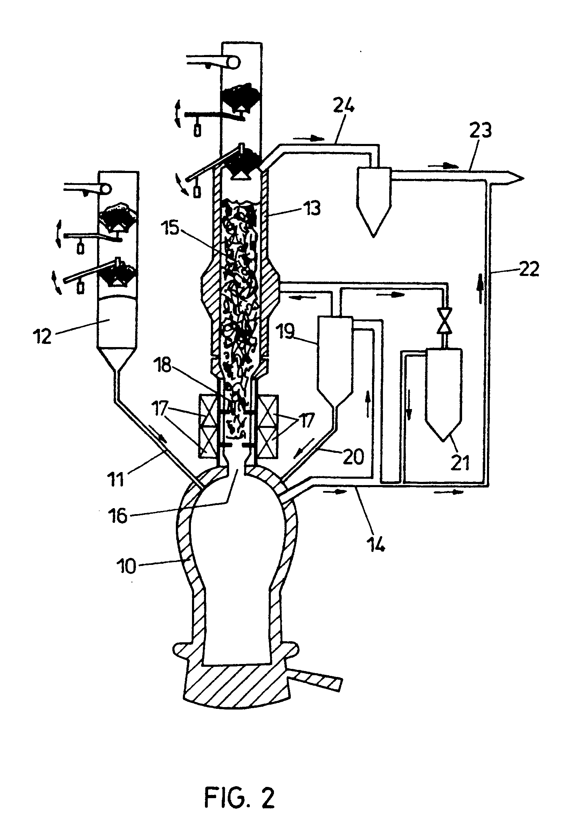

Die Erfindung wird nachfolgend an Hand von in der Zeichnung schematisch dargestellten Ausführungsbeispielen näher erläutert. In dieser zeigen : Fig. 1 eine Einrichtung zum Schmelzen von Schrott und Fig. 2 ein Schmelzreduktionsverfahren mit einem Einschmelzvergaser, wobei jeweils an der Chargenaufgabe die erfindungsgemäße Einrichtung eingezeichnet ist.

In Fig. 1 ist ein Schachtofen für die Durchführung eines Schrottschmelzverfahrens dargestellt, welcher mit 1 bezeichnet ist. Der Ofenschacht, in welchem die Vorwärmung des einzuschmelzenden Schrottes erfolgt, ist mit 2 bezeichnet und weist an seinem Übergang zum eigentlichen Schmelzofen Magnetspulen 3 auf. In das Innere des Schachtes 2 ragen Stützringe 4. Der Schacht 2 ist im Bereich der Magnetspulen 3 mit einem Mantel aus austenitischem Stahl 5 sowie einer feuerfesten keramischen Zustellung 6 ausgebildet, so daß die Feldkräfte zum Halten der Charge ausreichen.

Am Unterende des Schmelzofens 1 sind Brenner 7 angeordnet, welche die für das Schmelzen erforderliche Wärme erzeugen. Das Schmelzbad gelangt über eine Abstichöffnung 8 in einen Tiegel 9, in welchem die Schmelze gesammelt wird, wobei bei kontinuierlicher Verfahrensführung für einen raschen Wechsel des Tiegels 9 nach Erreichen einer bestimmten Füllhöhe Sorge getragen werden muß.

Bei der Ausbildung nach Fig. 2 ist ein Einschmelzvergaser 10 als Schmelzreduktionsofen vorgesehen. In einem derartigen Einschmelzvergaser 10 wird unter Verwendung von Kohle entsprechender Körnigkeit eine Kohlewirbelschicht aufrechterhalten, in welcher die Vergasung von Kohle gleichzeitig mit den Reduktionsprozessen abläuft, wobei gleichzeitig die erforderliche Schmelzwärme aufgebracht wird. Die Kohle wird hiebei über eine Leitung 11 aufgebracht und die vorangehenden Aufgabebunker 12 sind für die Chargierung von Kohle und Zuschlagstoffen, wie Kalk, ausgebildet.

An den Schmelzreduktionsofen 10 ist ein Vorwärmschacht 13 angeschlossen, in welchem das Einsatzmaterial vorreduziert und erwärmt wird. Die Vorreduktion erfolgt mit aus dem Einschmelzvergaser 10 über eine Leitung 14 abgezogenem Rohgas, welches als Reduktionsmittel für die Charge 15 eingesetzt werden kann. Die Charge wird somit bereits durch das heiße Vergasungsprodukt vorgewärmt, wobei bei der Ausbildung nach Fig. 2 ebenso wie bei der Ausbildung nach Fig. 1 der Zuführungskanal der Charge in den Schmelzofen, welcher in Fig. 2 mit 16 bezeichnet ist, in offener Verbindung mit dem Schmelzofen bzw. Einschmelzvergaser steht. An der Übergangsstelle zur Zuführungsöffnung 16 sind wiederum Magnetspulen 17 angeordnet, welche die erforderliche Haltekraft auf die Charge ausüben, solange diese ihren Curiepunkt nicht überschreitet. Es sind wiederum Stützringe vorgesehen, welche in Fig. 2 mit 18 bezeichnet sind.

Die übrigen Einrichtungen in der Darstellung nach Fig. 2 sind durchwegs konventioneller Natur und es ist mit 19 ein Heißgaszyklon bezeichnet, mit welchem feinkörniger Kohlestaub abgeschieden werden kann und über eine Leitung 20 dem Einschmelzvergaser rückgeführt werden kann. Weiters ist mit 21 ein Heißgaskühler bezeichnet, mit welchem die für die Vorreduktion nicht benötigte Gasmenge gekühlt und über eine Leitung 22 in die Austragsleitung 23 gebracht werden kann. Über diese Austragsleitung 23 wird das beim Einschmelzvergasungsprozeß gewonnene Rohgas abgezogen und für weitere energetische Nutzung bereitgestellt.

In den Vorwärm- und Reduktionsschacht 13 wird oxidisches Material chargiert, wobei das am Kopf des Schachtes anlangende Reduktionsgas nach weitgehender Vorreduktion über eine Leitung 24 abgezogen werden kann.

## Patentansprüche

1. Verfahren zum Chargieren von Roheisen, Schrott oder Erz in einem Schmelzofen (1) oder Schmelzreduktionsofen (10), bei welchem die Charge vor dem Einbringen in den Ofen vorgewärmt wird, dadurch gekennzeichnet, daß die Charge vor dem Einbringen unter Verwendung eines elektromagnetischen Feldes bis zum Erreichen einer vorbestimmten Temperatur gehalten wird.

2. Verfahren nach Anspruch 1, dadurch gekennzeichnet, daß die Charge durch Annäherung ihrer Temperatur an den Curiepunkt freigegeben wird.

3. Vorrichtung zur Durchführung des Verfahrens nach Anspruch 1 oder 2, dadurch gekennzeichnet, daß zwischen der Aufgabeöffnung des Ofens (1, 10) und einem Vorratsbunker bzw. einem Vorreduktionsofen (13) eine elektromagnetische Halteeinrichtung (3, 17) angeordnet ist.

4. Vorrichtung nach Anspruch 3, dadurch gekennzeichnet, daß die elektromagnetische Halteeinrichtung (3, 17) als den Zuführungskanal (2, 16) umgebende Spule ausgebildet ist.

5. Vorrichtung nach Anspruch 3 oder 4, dadurch gekennzeichnet, daß die elektromagnetische Halteeinrichtung (3, 17) als Ringmagnet ausgebildet ist.

6. Vorrichtung nach Anspruch 3, 4 oder 5, dadurch gekennzeichnet, daß der Zuführungskanal (2, 16) zumindest im Bereich der elektromagnetischen Halteeinrichtung (3, 17) aus nicht-ferromagnetischem Material (5), wie z.B. austenitischem Stahl mit feuerfester Zustellung (6), ausgebildet ist.

7. Vorrichtung nach einem der Ansprüche 3 bis 6, dadurch gekennzeichnet, daß der Zuführungskanal (2, 16) konisch ausgebildet ist.

8. Vorrichtung nach einem der Ansprüche 3 bis 7, dadurch gekennzeichnet, daß im Bereich der elektromagnetischen Halteeinrichtung (3, 17) in den Zuführungskanal (2, 16) ragende Stützelemente (4, 18), insbesondere Stützringe, angeordnet sind.

## Claims

1. Process for the charging of pig iron, scrap or ore in a melting furnace (1) or melt reduction furnace (10) in which the charge is preheated before being introduced into the furnace, characterised in that, before being introduced, the charge is held by means of an electromagnetic field until it has reached a predetermined temperature.

2. Process in accordance with claim 1, characterised in that the charge is released when its temperature approaches the Curie point.

3. Apparatus for carrying out the process in accordance with claim 1 or 2, characterised in that between the charge opening of the furnace (1, 10) and a storage bunker or a prereduction furnace (13) an electromagnetic holding device (3, 17) is located.

4. Apparatus in accordance with claim 3, characterised in that the electromagnetic holding device (3, 17) takes the form of a coil surrounding the feeding runner (2, 16).

5. Apparatus in accordance with claim 3 or 4, characterised in that the electromagnetic holding device (3, 17) takes the form of an annular magnet.

6. Apparatus in accordance with claim 3, 4 or 5, characterised in that, at least in the vicinity of the electromagnetic holding device (3, 17), the feeding runner (2, 16) is constructed of non-ferromagnetic material (5) such as, for example, austenitic steel with a fire-resistant lining (6).

7. Apparatus in accordance with one of claims 3 to 6, characterised in that the feeding runner (2, 16) is conical in shape.

8. Apparatus in accordance with one of claims 3 to 7, characterised in that, in the vicinity of the electromagnetic holding device (3, 17), supporting elements (4, 18), in particular supporting rings, are positioned, which project into the feeding runner (2, 16).

## Revendications

1. Procédé pour charger de 1 a fonte, des ferrailles ou du minerai dans un four de fusion (1) ou un four de fusion-réduction (10), dans lequel la charge est préchauffée avant son introduction dans le four, caractérisé en ce que la charge est retenue avant son introduction par l'utilisation d'un champ électromagnétique jusqu'à ce qu'elle ait atteint une température prédéterminée.

2. Procédé selon la revendication 1, caractérisé en ce que la charge est libérée par le fait que sa température se rapproche du point de Curie.

3. Dispositif pour la mise en oeuvre du procédé selon la revendication 1 ou 2, caractérisé en ce qu'un dispositif de retenue électromagnétique (3, 17) est interposé entre l'ouverture de chargement du four (1, 10) et un silo réservoir ou un four de préréduction (13).

4. Dispositif selon la revendication 3, caractérisé en ce que le dispositif de retenue électromagnétique (3, 17) est constitué par une bobine qui entoure le conduit d'alimentation (2, 16).

5. Dispositif selon la revendication 3 ou 4, caractérisé en ce que le dispositif de retenue électromagnétique (3, 17) est constitué par un aimant annulaire.

6. Dispositif selon l'une des revendications 3, 4 et 5, caractérisé en ce que le conduit d'alimentation (2, 16) est constitué, du moins dans la région du dispositif de retenue électromagnétique (3, 17) par une matière non ferromagnétique (5) comme, par exemple, de l'acier austénitique muni d'un garnissage réfractaire (6).

7. Dispositif selon une des revendications 3 à 6, caractérisé en ce que le conduit d'alimentation (2, 16) est de configuration conique.

8. Dispositif selon une des revendications 3 à 7, caractérisé en ce que des éléments de soutien (4, 18) en particulier des bagues de soutien, sont disposés dans la région du dispositif de retenue électromagnétique (3, 17), en saillie dans le conduit.

FIG. 1

FIG. 2